Europäisches Patentamt

(19) European Patent Office

Office européen des brevets

(11) Veröffentlichungsnummer: **0 007 611**
A1

(12) # EUROPÄISCHE PATENTANMELDUNG

(21) Anmeldenummer: 79102607.3

(51) Int. Cl.³: **G 01 M 13/02**
**G 01 M 7/00**

(22) Anmeldetag: 24.07.79

(30) Priorität: 02.08.78 DE 2833861

(43) Veröffentlichungstag der Anmeldung:
06.02.80 Patentblatt 80/3

(84) Benannte Vertragsstaaten:
BE FR GB

(71) Anmelder: **Saarbergwerke Aktiengesellschaft**
**Trierer Strasse 1**
**D-6600 Saarbrücken(DE)**

(72) Erfinder: **Ruffing, Hans**
**Semperstrasse 38**
**D-6600 Saarbrücken(DE)**

(54) Verfahren und Vorrichtung zum dynamischen Prüfen von Fördergurten.

(57) Bei einem Verfahren und einer Vorrichtung zum Prüfen der Haltbarkeit von Fördergurten (1) können die in der Praxis auftretenden verschiedenen Belastungsarten dadurch simuliert werden, dass der Vorspannung des Fördergurtes (1) während des Probelaufes eine impulsartig verlaufende Zusatzspannung überlagert wird. Sowohl die Impulsamplitude der Zusatzspannung als auch die Impulslänge sowie die Pausenzeit zwischen zwei Impulsen und die Geschwindigkeit des zu prüfenden Fördergurtes können auf vorgebbare Werte eingestellt werden.

EP 0 007 611 A1

./...

## Verfahren und Vorrichtung zum dynamischen Prüfen von Förder-
## gurten

Die Erfindung betrifft ein Verfahren zum dynamischen Prüfen
eines endlosen Fördergurtes, bei dem der Gurt über mehrere
Trommeln geführt, vorgespannt und dann einem Dauerlauf ausgesetzt wird, sowie eine Vorrichtung zur Durchführung des Verfahrens.

Fördergurte, die z. B. im Steinkohlenbergbau zum Transport
von Kohle und/oder Gestein über meist längere Förderwege
eingesetzt werden, sind ständig erheblichen Belastungen ausgesetzt, beispielsweise durch ständiges Anfahren und Stillsetzen, durch unterschiedliche Lastverteilung sowie durch
weitere, durch die besonderen Verhältnisse im Untertagebergbau hervorgerufenen Erfordernisse.
Es ist daher zweckmäßig, Fördergurte, bevor sie im Untertagebereich eingesetzt werden, einer gründlichen, praxisnahen
Prüfung hinsichtlich ihrer Belastbarkeit zu unterziehen.

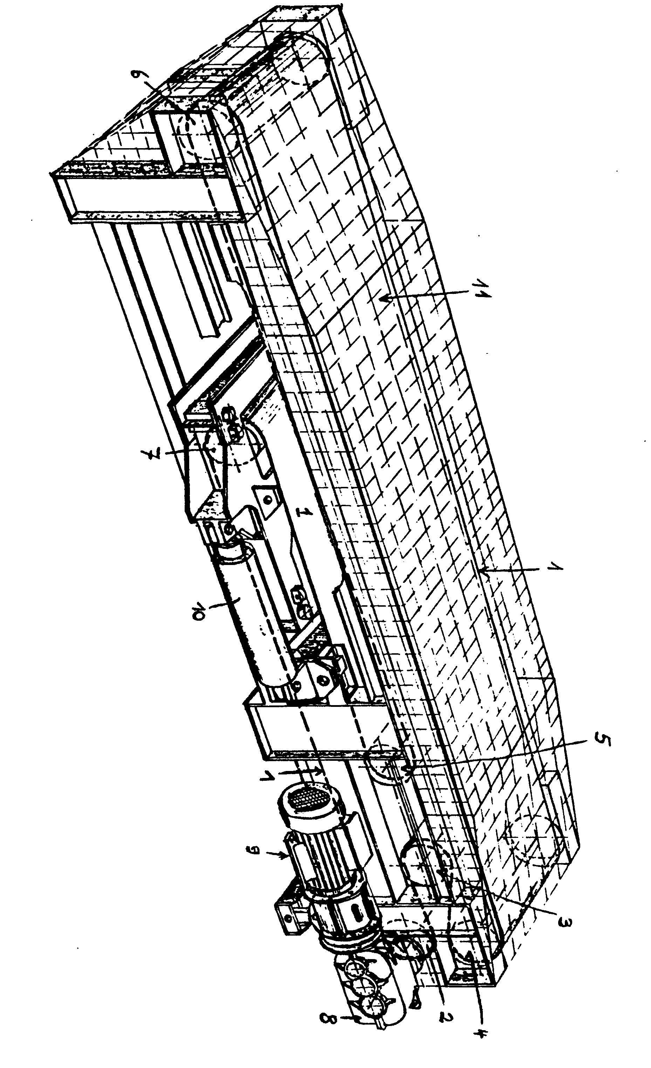

Zur Prüfung von Fördergurten im Dauerlauf ist eine Einrichtung bekannt geworden, die aus mehreren, in ein Tragegerüst
eingebauten, vom zu prüfenden Gurt umspannten Trommeln besteht, von denen eine mit einem Antrieb und eine weitere
als Spanntrommel mit einer Spannvorrichtung gekoppelt ist,
über die der Fördergurt, bevor er in Bewegung gesetzt wird,
mit einer Vorspannung als Maß für die Belastbarkeit versehen
wird. Bei dieser bekannten Vorrichtung beträgt der Durchmesser der Tragrollen etwa 25o mm. Die Rollenbreite liegt bei
etwa 2oo mm, während die Gurtgeschwindigkeit 3,85 m/sec beträgt. ("Glückauf", Bergmännische Zeitschrift, 1o3. Jahrgang, Heft 7 vom 3o.o3.1967, Seite 33o, Figur 7)

Ein wesentlicher Nachteil dieser bekannten Gurtprüfvorrichtung
liegt darin, daß im Zuge der Prüfung die Verhältnisse im Untertagebergbau oder auch in anderen Bereichen, in den Fördergurte eingesetzt werden, nicht ausreichend simuliert werden,
so daß über die Prüfergebnisse keine hinreichenden Rückschlüsse auf die tatsächliche Verwertbarkeit der Fördergurte an Ort und Stelle gewonnen werden können. Beispielsweise liegt bei der bekannten Vorrichtung die Breite der
Tragrollen bei etwa 2oo mm, während in der Praxis Fördergurte mit einer Breite bis zu 12oo mm eingesetzt werden.
Insbesondere ist es mit der bekannten Vorrichtung aber nicht
möglich, die durch ständiges Anfahren und Stillsetzen von
Fördergurten hervorgerufenen zusätzlichen Belastungen sowie
die Einflüsse der Gurtmuldung ausreichend zu simulieren.

Der Erfindung liegt die Aufgabe zugrunde, ein Verfahren zum
Prüfen von Fördergurten zu entwickeln, durch das es gelingt,
im Zuge der Prüfung möglichst viele im Einsatzfalle konkret
auftretenden Belastungen hinreichend zu simulieren.

Bei einem eingangs genannten Verfahren wird diese Aufgabe
erfindungsgemäß dadurch gelöst, daß während des Dauerlaufs
der Vorspannung des Gurtes eine sich zeitlich ändernde Zusatzspannung überlagert wird. Durch das erfindungsgemäße Verfahren gelingt es, die beim praktischen Betrieb eines Fördergurtes durch ständiges Anfahren und Stillsetzen in Gurtlängsachse hervorgerufenen zusätzlichen Belastungen bereits während
der Prüfung nachzuvollziehen, so daß aus dem Prüfergebnis nicht
nur Rückschlüsse auf die Haltbarkeit eines Gurtes bzw. einer
Gurtverbindung bei konstanten Dauerbelastungen, sondern vielmehr auch bei kurzfristigen, die Dauerbelastungen übersteigenden Spitzenbelastungen zu ziehen sind.

Zweckmäßigerweise liegt die die konstante Vorspannung übersteigende, zeitlich veränderbare Zusatzspannung mit ihrem Maximalwert zwischen 0 und 75 % des Betrages der gewählten
Vorspannung.

Die Impulsbreite der Zusatzspannung beträgt vorzugsweise
mindestens 6 sec und die Pausenzeit zwischen zwei Zusatzspannungsimpulsen mindestens 12 sec.

Ein Vorrichtung zur Durchführung des Verfahrens besteht aus
mehreren in ein Tragegerüst eingebauten, vom zu prüfenden Gurt
umspannten Trommeln von denen eine mit einem Antrieb und
mindestens eine weitere als Spanntrommel mit einer Spannvorrichtung gekoppelt ist, und zeichnet sich dadurch aus, daß
die Spannvorrichtung aus zwei mit einer zentralen Hydrauliksteuerung verbundenen hydraulischen Spannzylindern besteht,
die parallel zueinander beidseitig des Tragegerüstes in
Führungsschienen befestigt sind und über die der Gurt sowohl
mit einer konstanten Vorspannung als auch mit einer die Vorspannung überlagernde, sich zeitlich ändernde Zusatzspannung
belastbar ist.

Weitere Erläuterungen zu der Erfindung sind dem in der Figur
schematisch dargestellten Ausführungsbeispiel zu entnehmen.

Die Figur zeigt ein Ausführungsbeispiel einer nach dem erfindungsgemäßen Verfahren arbeitenden Fördergurtprüfmaschine.
Der zu prüfende Fördergurt ist über mehrere Trommeln 2,3,4,5,6
und 7 gespannt. Der Antrieb des Gurtes erfolgt über die Antriebstrommel 2, die über ein Getriebe 8 mit einem Elektromotor 9 verbunden ist. Die Breite der Trommeln liegt bei
etwa 14oo mm, so daß im Steinkohlebergbau übliche Fördergurte,
deren Breite bis zu 12oo mm beträgt, in ihrer normalen Breite
geprüft werden können. Der Antrieb der Prüfvorrichtung ist so
konzipiert, daß verschiedene Geschwindigkeiten gefahren werden
können, beispielsweise 2,5 m/sec oder 5 m/sec. Die einzelnen Trommeln lassen sich darüberhinaus auf einfache Weise auswechseln, so daß je nach Bedarf der Trommeldurchmesser variiert
werden kann.

Die Spannung des Gurtes erfolgt über die Spanntrommel 7, die
wiederum verschiebbar mit zwei parallel zueinander liegenden
Hydraulikzylindern, von denen in der Figur nur der Hydraulikzylinder lo zu sehen ist, verbunden ist. Beide Hydraulikzylinder werden über ein hier nicht dargestelltes zentrales Versorgungssystem gespeist. Es ist gewährleistet, daß das Aus-
bzw. Einfahren beider Zylinder immer vollkommen gleichmäßig
erfolgt, so daß eine unerwünschte Drehung der Spanntrommel 7
in Längsrichtung beim Aus- oder Einfahren nicht möglich ist.
Mittels einer hier nicht im einzelnen beschriebenen Steuereinrichtung ist es möglich, über die beiden Druckzylinder,
deren Druck bis maximal etwa 3oo bar liegt, die Spanntrommel 7
mit einer konstanten Vorspannung zu belasten. Je nach der zu
prüfenden Gurtart liegt diese Vorspannung bis zu 75 Mp. Darüberhinaus ist es aber auch möglich, zusätzlich zur Vorspannung
eine zeitlich sich ändernde Zusatzspannung auf den Gurt zu
übertragen, um das dem praktischen Einsatz entsprechende Anfahren und Stillsetzen zu simulieren. Die Zusatzspannung wird
in der Regel in Form rechteckiger Impulse übertragen, wobei
die Pausenzeit zwischen zwei Impulsen nicht kleiner als 12 sec,
die Impulslänge nicht kleiner als 6 sec und die Impulshöhe
nicht größer als 75 % der angelegten Vorspannung sein sollte.
Zweckmäßigerweise wird der Vorgang der sich ständig ändernden
Belastung des Gurtes während des Dauerprüfversuchs mittels
eines auf einen bestimmten (z. B. ein Tag) Zeitraum eingestellten Programmschaltwerkes automatisiert.

Eine die Gurtprüfmaschine überspannendes Schutzgitter 11 dient
als Absicherung gegenüber Gurtrissen.

Neben der Überprüfung der Belastbarkeit von Fördergurten ist es mit der erfindungsgemäßen Prüfvorrichtung darüberhinaus möglich, den Einfluß von Gurtspannung, Gurtumlenkung und Gurtgeschwindigkeit auf die benötigte Antriebsleistung festzustellen, was für die Berechnung und Auslegung neuer Bandanlagen von wesentlicher Bedeutung ist.

Patentansprüche:

1. Verfahren zum dynamischen Prüfen eines endlosen Fördergurtes, bei dem der Gurt über mehrere Trommeln geführt,
vorgespannt und dann einem Dauerlauf ausgesetzt wird, dadurch gekennzeichnet, daß während des Dauerlaufs der Vorspannung des Gurtes eine sich zeitlich ändernde Zusatzspannung überlagert wird.

2. Verfahren nach Anspruch 1, dadurch gekennzeichnet, daß
Impulsbreite und Impulshöhe der Zusatzspannung sowie die
Pausenzeit zwischen zwei Impulsen veränderbar sind.

3. Verfahren nach den Ansprüchen 1 oder 2, dadurch gekennzeichnet, daß die Impulshöhe der Zusatzspannung auf Werte
zwischen O und 75 % der gewählten Vorspannung eingestellt
wird.

4. Verfahren nach einem der Ansprüche 1 bis 3, dadurch gekennzeichnet, daß die Impulsbreite der Zusatzspannung auf mindestens 6 sec und die Pausenzeit zwischen den einzelnen
Impulsen auf mindestens 12 sec eingestellt wird.

5. Verfahren nach einem der Ansprüche 1 bis 4, dadurch gekennzeichnet, daß die Geschwindigkeit des zu prüfenden Fördergurtes veränderlich einstellbar ist.

6. Vorrichtung zur Durchführung des Verfahrens nach Anspruch 1 mit mehreren in ein Tragegerüst eingebauten, vom zu prüfenden Gurt umspannten Trommeln, von denen eine mit einem Antrieb und mindestens eine weitere als Spanntrommel mit einer Spannvorrichtung gekoppelt ist, dadurch gekennzeichnet, daß die Spannvorrichtung aus zwei mit einer zentralen Hydrauliksteuerung verbundenen hydraulischen Spannzylindern besteht, die parallel zueinander beidseitig des Tragegrüstes in Führungsschienen befestigt sind und über die der Gurt sowohl mit einer konstanten Vorspannung als auch mit einer die Vorspannung überlagernden, sich zeitlich ändernden Zusatzspannung belastbar ist.

7. Vorrichtung nach Anspruch 6, dadurch gekennzeichnet, daß die Breite der Trommeln bei etwa 1400 mm liegt.

8. Vorrichtung nach den Ansprüchen 6 oder 7, dadurch gekennzeichnet, daß Trommeln verschiedener Durchmesser einsetzbar sind.

9. Vorrichtung nach einem der Ansprüche 6 bis 8, gekennzeichnet durch ein zusätzliches Programmschaltwerk, das über einen bestimmten Zeitraum hinweg die vorgesehene, sich zeitlich ändernde Belastung des zu prüfenden Gurtes schaltet.

Europäisches Patentamt

**EUROPÄISCHER RECHERCHENBERICHT**

Nummer der Anmeldung

EP 79 10 2607

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | <u>US - A - 1 802 676</u> (R. SKUTSCH) <br> * Ganzes Dokument * <br><br> -- <br><br> <u>DE - A - 2 242 603</u> (UNIROYAL, INC.) <br> * Patentansprüche; Figuren * <br><br> ---- | 1 <br><br><br><br> 1,2,5 6 | G 01 M 13/02 <br> 7/00 |

RECHERCHIERTE SACHGEBIETE (Int. Cl. 3)

G 01 M 13/00
13/02
7/00
19/00

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-11-1979 | VAN ASSCHE |

EPA form 1503.1 06.78